(19) Europäisches Patentamt / European Patent Office / Office européen des brevets

(11) **EP 1 730 424 B1**

(12) **FASCICULE DE BREVET EUROPEEN**

(45) Date de publication et mention
de la délivrance du brevet:
**15.08.2007 Bulletin 2007/33**

(21) Numéro de dépôt: **05737059.5**

(22) Date de dépôt: **11.03.2005**

(51) Int Cl.:
**F16H 55/08** (2006.01)

(86) Numéro de dépôt international:
**PCT/FR2005/000600**

(87) Numéro de publication internationale:
**WO 2005/098279 (20.10.2005 Gazette 2005/42)**

(54) **ORGANE DENTE ET ENGRENAGE S'Y RAPPORTANT**

GEZAHNTES GLIED UND ENTSPRECHENDER EINGRIFFSPUNKT

TOOTHED MEMBER AND A CORRESPONDING LOCUS

(84) Etats contractants désignés:
**AT BE BG CH CY CZ DE DK EE ES FI FR GB GR HU IE IS IT LI LT LU MC NL PL PT RO SE SI SK TR**

(30) Priorité: **12.03.2004 FR 0402614**

(43) Date de publication de la demande:
**13.12.2006 Bulletin 2006/50**

(73) Titulaire: **Katz, André**
**75013 Paris (FR)**

(72) Inventeur: **Katz, André**
**75013 Paris (FR)**

(74) Mandataire: **Pontet, Bernard et al**
**Pontet Allano & Associés S.E.L.A.R.L.**
**25, rue Jean-Rostand**
**Parc Club Orsay Université**
**91893 Orsay Cédex (FR)**

(56) Documents cités:
**US-A- 3 251 236**     **US-A- 5 271 289**

**Description**

La présente invention concerne un organe denté destiné à une relation d'engrènement avec un organe denté compatible.

La présente invention concerne également un engrenage dans lequel deux organes dentés de ce genre sont en relation d'engrènement.

Malgré l'importance industrielle des engrenages, leur géométrie n'a reçu que fort peu d'attention théorique, et n'a guère évolué depuis la fin du 19éme siècle. La transmission de puissance (par opposition aux rouages d'horlogerie) recourt universellement aux profils en développante de cercle.

Dans un engrenage homocinétique, le mouvement est transmis d'une roue dentée à l'autre comme si deux cercles théoriques, dits "cercles primitifs", concentriques chacun à l'une des deux roues dentées dont il est solidaire, roulaient l'un sur l'autre en un point de roulement situé par conséquent sur la ligne droite passant par les deux centres des cercles primitifs, autrement dit par les deux axes des roues.

On appelle "courbe d'action" le lieu géométrique des points de contact entre les dents des deux roues lors de la relation d'engrènement, par rapport à la ligne des centres supposée fixe. Dans les engrenages en développante de cercle, la courbe d'action est constituée par deux segments de droite qui se coupent au point de roulement et qui sont obliques par rapport à la ligne des centres. Ces deux segments sont portés par deux droites dont chacune est tangente à deux cercles de base, concentriques chacun avec l'un des cercles primitifs. Il est connu que les segments le long desquels se déplacent les points de contact doivent être suffisamment courts pour ne pas atteindre les points de tangence avec les cercles de base, car en ces points de tangence la pression de contact prendrait une valeur infinie. Pour cette raison, les dents sont raccourcies et présentent typiquement un sommet plat.

Lorsqu'une dent d'engrenage en développante de cercle entre en contact d'engrènement, la pression de contact passe brusquement de la valeur zéro à sa valeur maximale. Il en résulte un choc et la répétition de ces chocs produit le bruit caractéristique des engrenages à taille droite.

On peut diminuer ce bruit par la taille hélicoïdale des roues dentées, qui a pour effet que l'attaque a lieu point par point et non plus sur toute une ligne à la fois la long de la dimension axiale de la dent. Il en résulte toutefois une poussée axiale désavantageuse.

Par ailleurs, les engrenages en développante de cercle doivent présenter au moins un nombre minimum de dents sur chaque roue, en général environ une douzaine. En dessous de cette valeur, le contact de transmission de puissance entre la roue à faible nombre dents et l'autre organe denté (roue ou crémaillère) n'est pas continu, ou bien des problèmes d'interférence apparaissent entre les deux profils.

Le US-A 3 251 236 , qui montre un organe denté comprenant toutes les caractéristiques du préambule de la revendication 1, enseigne de rechercher des profils d'engrènement où les deux points de prise de contact mutuel, qui appartiennent chacun à l'un des deux profils, ont tous deux au moment de la prise de contact leur centre de courbure qui vient coïncider avec le point de roulement des cercles primitifs. Mais la description de ces profils est essentiellement picturale. Le document propose de partir d'un profil de base, typiquement un profil de crémaillère, ayant un point dont le centre de courbure se trouve sur la courbe primitive, et de fabriquer les roues dentées par génération à partir de ce profil de base.

Le US-A 5 271 289 décrit des dents d'engrenage dont les faces actives sont entièrement convexes.

Le but de la présente invention est de définir une nouvelle géométrie qui s'affranchit des inconvénients et limitations ci-dessus rappelés des engrenages en développante de cercle, et qui offre une grande liberté de choix et d'optimisation du profil d'engrenage et du processus d'engrènement.

Suivant l'invention, l'organe denté mobile en rotation autour d'un axe et comprenant des dents qui dans chaque plan perpendiculaire à l'axe sont délimitées par un profil d'engrenage qui en cours d'engrènement vient en contact avec un profil conjugué d'un organe denté compatible, en des points de contact qui se déplacent le long d'un lieu géométrique appelé courbe d'action, tandis que le profil d'engrenage et le profil conjugué ont respectivement la même vitesse de rotation que deux courbes primitives, à savoir deux cercles primitifs idéaux liés chacun à l'un respectif du profil d'engrenage et du profil conjugué, ces deux cercles primitifs roulant l'un sur l'autre, sans glissement, en un point de roulement qui est fixe par rapport à la courbe d'action, la courbe d'action possédant au moins un sommet où la distance entre la courbe d'action et le point de roulement prend une valeur maximale, le profil d'engrenage présentant en au moins un point un rayon de courbure égal à ladite valeur maximale, ce point du profil d'engrenage passant par ledit sommet de la courbe d'action dans une orientation où, en ce point du profil d'engrenage, le centre de courbure du profil d'engrenage coïncide avec le point de roulement, est caractérisé en ce que dans un repère dont l'axe des abscisses est la ligne des centres de rotation des courbes primitives, et dont l'axe des ordonnées est la tangente commune aux courbes primitives au point de roulement , les coordonnées cartésiennes d'une courbe définissant au moins une partie du profil d'engrenage sont :

$$x(t) = p\left(\cos\left(\frac{\psi(t)}{p}\right) - 1\right) + \rho(t)\sin\left(\delta(t) + \frac{\psi(t)}{p}\right)$$

$$y(t) = p\sin\left(\frac{\psi(t)}{p}\right) - \rho(t)\cos\left(\delta(t) + \frac{\psi(t)}{p}\right)$$

expressions dans lesquelles :

- $p$ est un entier positif ou négatif, $-p$ est l'abscisse du centre de rotation et $|p|$ est le nombre de dents de l'organe denté,
- $\delta(t)$, $\rho(t)$ sont les coordonnées polaires du point t de la courbe d'action dans un système centré au point de roulement, dont l'axe polaire est tangent au cercle primitif, pour lequel l'angle polaire est dans l'intervalle $[0, \pi]$ et le rayon vecteur est positif sur un lobe de la courbe d'action et négatif sur l'autre.

$$\psi(t) = \int_{t_0}^{t} \frac{\rho'(\tau)d\tau}{\cos(\delta(\tau))}$$

- $t_0$ est un nombre arbitraire dont la variation correspond à une rotation de l'organe denté autour de son pivot.

L'invention est basée sur une réflexion concernant d'une part le lien univoque entre la courbe d'action et le profil d'engrenage de l'organe denté, et d'autre part sur le choix d'une courbe, d'action ayant pour effet d'éliminer les inconvénients des engrenages en développante de cercle.

Les points de la courbe d'action qui sont situés à des maximums de distance du point de roulement correspondent à des prises de contact d'engrènement ou à des disparitions de contact d'engrènement, selon le sens de rotation des organes dentés.

Suivant l'invention, ces sommets de la courbe d'action, au lieu d'être des extrémités de segments rectilignes comme dans les engrenages en développante de cercle, ont une normale passant par le point de roulement. En outre, des points du profil d'engrenage qui passent par un sommet de la courbe d'action présentent une courbure qui, lorsque ce point coïncide avec le sommet de la courbe d'action, est centrée sur le point de roulement.

Deux organes dentés compatibles pour engrener ensemble présentent des profils d'engrenage dits conjugués, c'est-à-dire présentant entre eux des contacts glissants quand on fait tourner les courbes primitives autour de leur centre respectif. L'une des conditions pour que les profils soient conjugués est que leurs courbes d'action coïncident lorsque ces organes dentés sont dans leur état d'engrènement mutuel.

Dès lors, lorsque l'organe denté selon l'invention engrène avec un organe denté compatible, et que l'on se trouve dans une position relative où il y a un contact au sommet de la courbe d'action, les profils présentent tous deux en ce point de contact une courbure identique centrée sur le point de roulement. Un tel contact est appelé "osculateur". Or il est connu que lorsque les courbures sont égales, la pression de contact s'annule, à l'approximation hertzienne. Comme cette situation correspond à la prise de contact dans l'un des sens de rotation, on réalise selon l'invention un organe denté capable d'un engrènement sans chocs, et par conséquent silencieux.

Si la courbe d'action s'étend de part et d'autre du sommet, le profil d'engrènement, après avoir rencontré le sommet de la courbe d'action dans le sens de la prise de contact avec le profil conjugué, va ensuite, dès qu'il a dépassé le sommet de la courbe d'action en se rapprochant du point de roulement, croiser la courbe d'action non plus en seul point, mais en deux. Ceci signifie que le point de contact osculateur unique au moment de la prise de contact, se subdivise immédiatement en deux points de contact distincts.

Une courbe d'action convenable selon l'invention peut typiquement être tout ou partie d'une lemniscate présentant un point double qui coïncide avec le point de roulement, et deux lobes qui coupent la ligne des centres de rotation des courbes primitives de part et d'autre du point double.

Le mot "lemniscate" est ici employé au sens très général d'une courbe ayant globalement la forme du symbole ∞, sans que cette appellation de lemniscate soit limitée à une définition mathématique plus précise.

Au contraire, il entre dans le cadre de la présente invention de choisir la lemniscate en fonction de particularités voulues pour le profil des dents, et pour leur mode d'engrènement, comme on l'exposera avec divers exemples plus loin.

Si la lemniscate est complète, les points de contact balaient l'ensemble du profil denté, aussi bien le fond des creux que le sommet des dents, ce qui est tout à fait original par rapport aux dentures en développante de cercle.

On peut toutefois, également, évider certaines parties du profil d'engrenage pour supprimer certaines parties de la courbe d'action. Ceci peut notamment être avantageux pour faire disparaître le contact dans des régions où l'angle de pression prend des valeurs trop élevées.

Bien que les lemniscates soient des courbes d'action très préférées, elles ne constituent pas la seule possibilité. En particulier tous les profils d'engrenage parallèles à un profil d'engrenage selon l'invention sont des profils d'engrenage selon l'invention. Si un profil d'engrenage selon l'invention, obtenu par exemple par parallélisme comme il vient d'être dit, est situé complètement à l'extérieur ou complètement à l'intérieur de la courbe primitive, la courbe d'action ne passe plus par le point de roulement et devient une courbe fermée simple, sans point double.

Avec les formules selon l'invention, le choix d'une courbe d'action convenable permet de déterminer directement les profils de denture correspondants.

Selon un autre aspect de l'invention, celle-ci vise un engrenage comprenant deux organes dentés inter-engrenés, chacun conforme au premier aspect et ayant des courbes d'action qui coïncident.

L'invention vise également un engrenage comprenant deux organes dentés selon le premier aspect, caractérisé en ce que la naissance d'un contact entre deux dents a lieu au sommet de la courbe d'action, par une osculation des deux profils, suivie d'un dédoublement du contact osculateur en deux contacts simples.

D'autres particularités et avantages de l'invention ressortiront encore de la description ci-après, relative à des exemples non limitatifs. Aux dessins annexés:

- la figure 1 représente deux roues dentées selon l'invention, engrenant l'une avec l'autre ;
- les figures 2 et 3 sont des vues agrandies de la zone de l'engrènement dans deux positions relatives différentes des roues dentées;
- la figure 4 est une vue à échelle agrandie d'une dent de la roue dentée de gauche des figures 1 à 3, en liaison avec une partie de la courbe d'action ;
- la figure 5 est une vue de la courbe d'action des figures 1 à 4, avec visualisation de divers paramètres ;
- la figure 6 est une vue analogue à la figure 3 en regard d'un graphique de la fonction $\psi$ (t) pour le mode de réalisation de la figure 7 ;
- les figures 7 et 8 sont des vues analogues à la figure 6, mais pour deux autres modes de réalisation ;
- les figures 9 à 11 sont trois vues analogues aux figures 1 à 3, mais pour le mode de réalisation selon la figure 7 ;
- les figures 12 à 14 sont trois vues analogues aux figures 1 à 3, mais pour le mode de réalisation selon la figure 8 ;
- la figure 15 est une vue d'un quatrième mode de réalisation d'un engrenage selon l'invention ;
- les figures 16 et 17 sont des de la réalisation de la figure 15, dans deux autres positions relatives des roues dentées ;
- les figures 18, 19, 20 représentent trois modes de réalisation pour la zone d'engrènement de roues dentées à dents nombreuses ;
- les figures 21 et 22 représentent deux exemples de courbes d'action dissymétriques ;
- les figures 23 et 24 montrent deux engrenages selon l'invention ayant respectivement les courbes d'action dissymétriques des figures 21 et 22 ;
- les figures 25, 26 et 27 sont trois vues analogues aux figures 1 à 3, mais pour un engrenage intérieur selon l'invention ;
- la figure 28 est une vue à échelle intermédiaire de la zone d'engrènement du mode de réalisation des figures 25 à 27 ;
- les figures 29 à 32 sont des vues analogues aux figures 25 à 28, mais pour un autre mode de réalisation d'un engrenage intérieur ;
- les figures 33 à 36 sont des vues analogues aux figures 25 à 28, mais pour un engrenage à pignon et crémaillère selon l'invention ; et,
- les figures 37 à 40 sont des vues d'un autre mode de réalisation d'un engrenage à pignon et crémaillère selon l'invention, dans quatre positions relatives différentes.

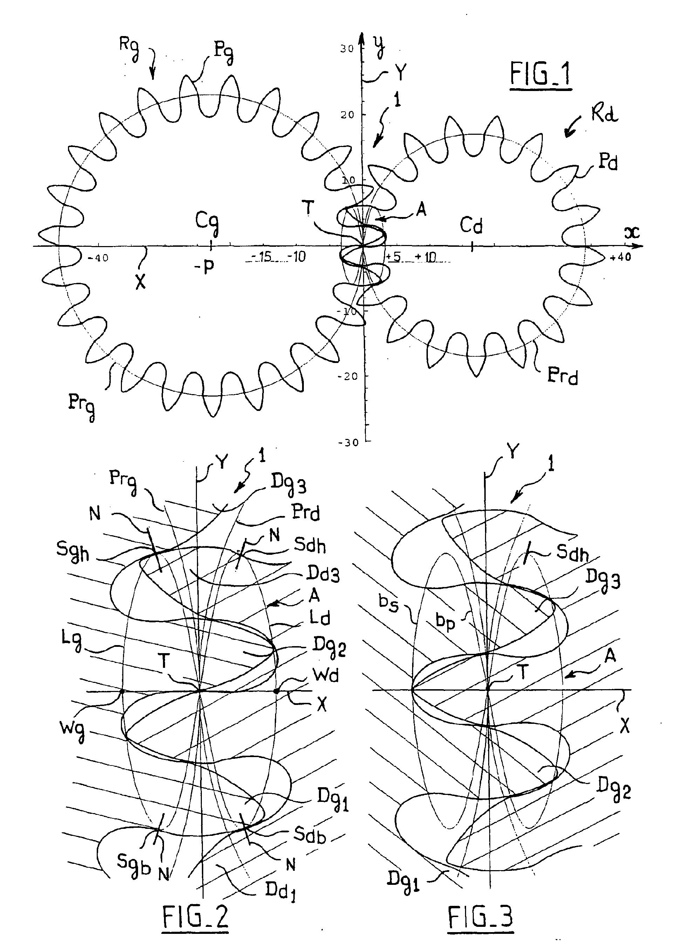

Dans l'exemple représenté aux figures 1 à 6, une roue dentée $R_g$, située à gauche sur les dessins, engrène extérieurement avec une roue dentée $R_d$. Dans la zone d'engrènement 1, le profil d'engrenage $P_g$ de la roue $R_g$ est en contact glissant par plusieurs points de contact avec le profil d'engrenage $P_d$ de la roue $R_d$. A chaque roue $R_g$, $R_d$ est associé un cercle primitif respectif $Pr_g$, $Pr_d$ qui est solidaire de la roue associée, a son centre $C_g$, $C_d$ sur l'axe de rotation de la roue associée, et un diamètre proportionnel au nombre de dents de la roue associée. Le facteur de proportionnalité est choisi de façon que les cercles primitifs $Pr_g$ et $Pr_d$ soient tangents en un point de roulement T qui est à l'intersection entre la ligne des centres X passant par les centres $C_g$ et $C_d$, et la tangente commune Y aux deux cercles primitifs $Pr_g$ et $Pr_d$.

On appelle courbe d'action le lieu géométrique des points de contact entre les profils $P_g$ et $P_d$ dans la zone d'engrènement. La courbe d'action est une lemniscate A (figures 2 et 3), autrement dit une courbe en forme générale de 8 ou de ∞, présentant un point double qui coïncide avec le point de roulement T, et deux lobes, à savoir un lobe $L_g$

entièrement situé du côté de la roue $R_g$ par rapport à la tangente commune Y, et un lobe $L_d$, entièrement situé du côté de la roue $R_d$ par rapport à la tangente commune Y. Le lobe $L_g$ coupe la ligne des centres X en un point $W_g$ situé entre le centre $C_g$ et le point de roulement T. Le lobe $L_d$ coupe la ligne des centres X en un point $W_d$ situé entre le point de roulement T et le centre $C_d$.

Chacun des deux lobes $L_g$ et $L_d$ présente deux sommets situés de part et d'autre de la ligne des centres X, appelés respectivement $S_{gh}$, $S_{gb}$, $S_{dh}$ et $S_{db}$. Ces sommets sont des points de la lemniscate A où lorsqu'on parcourt celle-ci, on passe par un maximum de distance entre la lemniscate et le point de roulement T, ce qui signifie que les normales N à la lemniscate issues de ces quatre sommets passent par le point de roulement T.

On suppose maintenant, en observant notamment les figures 2 et 3, que les dents des profils se déplacent vers le bas dans la zone d'engrènement 1, et que la roue $R_g$ est menante. Dans la situation représentée à la figure 2, la face avant, relativement au sens du mouvement, d'une dent $D_{g3}$ est en train de prendre contact avec la face arrière d'une dent $D_{d3}$ de la roue $R_d$ au moment où la face avant d'une dent $D_{g1}$ de la roue de gauche $R_g$, située deux dents en avance sur la dent $D_{g3}$ précitée, est en train de quitter le contact avec la face arrière d'une dent $D_{d1}$ appartenant à la roue $R_d$ et possédant deux dents d'avance sur la dent $D_{d3}$.

Dans cet exemple où la course angulaire de travail d'une face de denture correspond ainsi à deux pas angulaires de denture de sorte qu'il y a toujours deux faces de denture qui transmettent le moment de rotation sur chaque roue, on dit que le facteur de conduite est exactement égal à 2.

On appelle branches principales bp de la courbe d'action A les deux arcs, se croisant au point de roulement T, et s'étendant chacun entre deux sommets successifs. Il y a donc une branche principale allant du sommet $S_{gh}$ au sommet $S_{db}$ et une branche principale allant du sommet $S_{dh}$ au sommet $S_{gb}$. Entre leurs deux extrémités, les branches principales ne contiennent pas de sommet, c'est-à-dire d'extremum de la distance au point de roulement T.

On appelle branches secondaires bs de la lemniscate les deux arcs qui referment chacun l'un des lobes $L_g$, $L_d$ de la lemniscate, et qui contiennent donc chacun l'un des points $W_g$ et $W_d$.

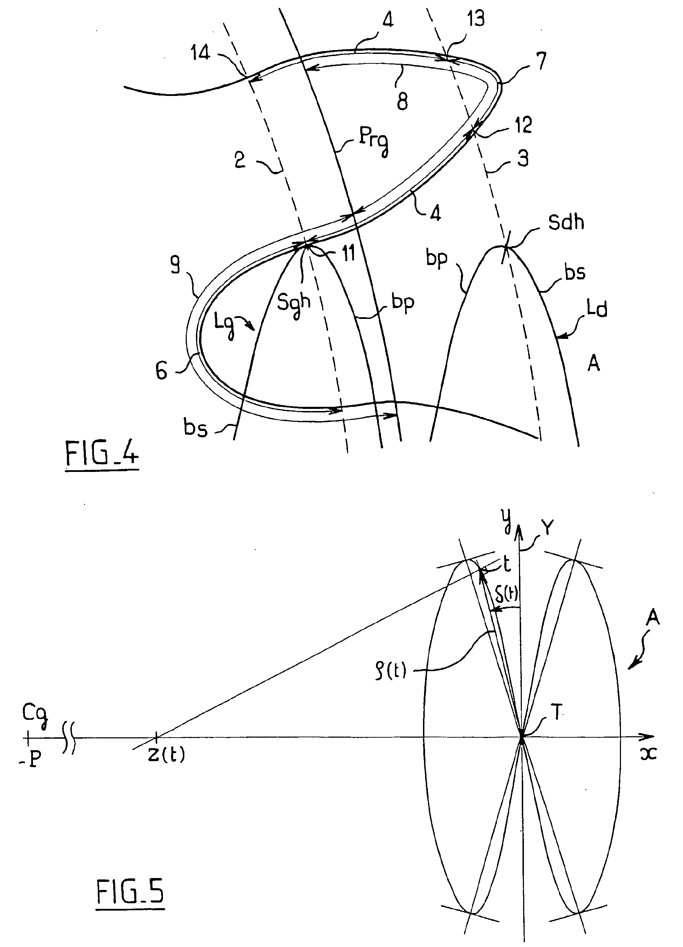

En référence à la figure 4, on appelle flancs 4 les parties des profils d'engrenage qui entrent en contact le long des branches principales bp de la courbe d'action. Il s'agit donc des parties du profil d'engrenage qui sont comprises entre d'une part le cercle 2 passant par les sommets tels que $S_{gh}$ du lobe tel que $L_g$ situé à l'intérieur du cercle primitif $Pr_g$, et d'autre part le cercle 3 passant par les sommets tels que $S_{dh}$ du lobe tel que $L_d$ situé radialement à l'extérieur du cercle primitif $P_{rg}$ de la roue concernée. On appelle fond 6 la partie du profil située radialement à l'intérieur du cercle 2, et tête 7 du profil la partie du profil située radialement au-delà du cercle 3. Par ailleurs, on appelle addendum 8 du profil la partie du profil située radialement au-delà du cercle primitif $P_{rg}$, dans le cas de la roue $R_g$ représenté à la figure 4, et dedendum 9 la partie du profil située radialement à l'intérieur du cercle primitif $Pr_g$. Par conséquent, l'addendum comprend la tête 7 et une partie des flancs 4 d'une dent, et le dedendum le reste des flancs 4 et le fond 6.

Les points de contact se trouvant sur l'addendum 8 ont pour lieu géométrique le lobe $L_d$ se trouvant au-delà du cercle primitif $Pr_g$, et les points de contact se trouvant sur le dedendum 9 ont pour lieu géométrique le lobe $L_g$ se trouvant radialement à l'intérieur du cercle primitif $Pr_g$.

Les points de contact se trouvant sur la tête 7 ont pour lieu géométrique la branche secondaire bs du lobe $L_d$ situé à l'extérieur du cercle primitif, tandis que les points de contact se trouvant sur le fond 6 ont pour lieu géométrique la branche secondaire bs du lobe $L_g$ situé à l'intérieur du cercle primitif $Pr_g$.

Les points de contact se trouvant sur un flanc de denture 4 ont pour lieu géométrique l'une des branches principales bp de la lemniscate.

En observant les figures 2 et 3, on voit que la face avant de la dent $D_{g3}$ entre en contact avec la face arrière de la dent $D_{d3}$ au sommet $S_{gh}$. Le contact a lieu entre d'une part le point de raccordement du flanc avant avec le creux de la dent $D_{g3}$ et d'autre part le point de raccordement du flanc arrière avec la tête de la dent $D_d3$.

Suivant l'invention, le rayon de courbure des deux profils en ces deux points est égal à la distance entre le sommet $S_{gh}$ (où se produit le contact) et le point de roulement T, et l'orientation des deux profils au moment du contact mutuel de ces deux points est telle que leur centre de courbure au point de contact est le point de roulement T.

Un tel contact, qui a lieu entre deux profils qui ont localement même courbure et même centre de courbure est dit osculateur. Il correspond à une annulation de la pression de contact, à l'approximation hertzienne.

A la figure 3, la dent $D_{g3}$ a tourné d'environ 3/4 de pas de denture. Le contact osculateur s'est immédiatement subdivisé en deux contacts simples, l'un principal qui parcourt la branche principale bp de la lemniscate en direction du point de roulement T, et qui remonte le long du flanc avant de la dent $D_{g3}$ en direction de la tête du profil, l'autre qui suit la branche secondaire bs de la lemniscate, et parcourt le fond du profil de la roue $R_g$, et la tête du profil de la roue $R_d$. Le contact secondaire reste menant jusqu'au passage par la ligne X des centres, où l'angle de pression traverse la valeur $\dfrac{\pi}{2}$ et où le contact passe de menant à mené. Ce contact secondaire désormais mené vient mourir au sommet $S_{gb}$ du même lobe ($L_g$) en s'agrégeant avec le précédent contact mené principal pour former un contact osculateur qui disparaît.

Pendant ce temps, le contact menant principal, après être passé par le point de roulement T, a changé de lobe pour venir disparaître au sommet $S_{db}$ de l'autre lobe $L_d$ situé de l'autre côté de la ligne des centres X, en même temps qu'un contact secondaire qui a été créé mené au sommet $S_{dh}$ et est devenu menant en traversant la ligne des centres X.

On voit à la figure 3, sur la face arrière de la dent $D_{g3}$, les deux contacts menés quelque temps après qu'ils soient apparus au sommet $S_{dh}$. Un peu plus loin, situation que l'on observe sur la dent précédente $D_{g2}$, le contact mené principal a changé de lobe pour passer sur le lobe $L_g$ et le contact initialement mené a franchi le sommet de la dent pour y créer un contact menant entre la tête de la dent $D_{g2}$ et le fond de denture de la roue $R_d$.

Tous les contacts naissent et meurent en l'un ou l'autre des quatre sommets de lobe, toujours sous la forme de contacts osculateurs. Il y a donc sur chaque profil élémentaire comprenant deux flancs une tête et un fond, quatre points où le rayon de courbure est égal au rayon polaire du sommet où ce point va être en contact osculateur avec un point correspondant de l'autre profil. Ces points, désignées par 11, 12, 13, 14 à la figure 4, sont les points de raccordement entre fond, flanc, tête, flanc et fond du profil.

L'observation des figures 2 et 3 montre que la totalité du profil est composée de points qui à un moment ou un autre entrent en contact avec l'autre profil.

On va maintenant aborder une description plus théorique du système d'engrènement selon l'invention.

On dit que deux courbes planes, en particulier des profils d'engrenage, sont conjuguées si elles présentent entre elles des contacts glissants quand on les fait tourner d'angles proportionnels autour de deux pivots distincts et fixes.

De façon classique, on attache aux profils conjugués deux courbes, dites primitives, qui roulent sans glisser l'une sur l'autre dans le mouvement relatif. Dans le cas homocinétique, dont l'application est la plus fréquente, ces courbes sont des cercles (primitifs) centrés sur les pivots, et tangents l'un à l'autre au point de roulement T. Le lieu géométrique des contacts glissants s'appelle la (ou les) courbe(s) d'action. Chaque point de contact a une trajectoire correspondant à une partie de la courbe d'action.

Les dents de deux roues engrenées se présentent comme des modulations de leurs cercles primitifs, modulations qui croisent périodiquement les cercles primitifs. Cette allure générale n'est pas géométriquement nécessaire, mais elle est raisonnable dans une première approche, car la vitesse de glissement est proportionnelle à la distance entre le contact et le point de roulement entre les cercles primitifs, et il convient donc que la courbe d'action ne s'éloigne pas trop de celui-ci. Les courbes d'action passent alors au point de roulement et s'y coupent. Dans la denture classique en développante de cercle, on décide arbitrairement que ces courbes d'action sont des segments de droite, mais il a été trouvé selon l'invention que ce choix n'est pas pertinent. Au contraire, selon l'invention, la courbe d'action est typiquement une courbe régulière (c'est-à-dire sans point anguleux) fermée, présentant au point de roulement un point double. De telles courbes, dont l'allure est celle du symbole ∞, portent le nom générique de lemniscates. On a représenté une telle lemniscate A aux figures 1 à 3 et 5.

Il s'avère commode (voir figure 5) de représenter la courbe d'action en coordonnées polaires ($\rho(t)$, $\delta(t)$), avec l'origine au point double T et comme axe polaire l'axe vertical Y (orthogonal à la ligne X des pivots), en sorte que l'angle polaire $\delta(t)$ s'identifie à l'angle de pression local. Pour éviter des singularités inessentielles, on choisit de faire varier l'angle $\delta(t)$ entre 0 et $\pi$ ; le rayon vecteur $\rho(t)$ sera positif le long du lobe de gauche $L_g$, et négatif le long du lobe de droite $L_d$ ; étant donné que, le long d'une lemniscate typique, l'angle polaire ainsi défini n'atteint pas les valeurs 0 et $\pi$, ce choix inhabituel est compatible avec la continuité des fonctions $\rho(t)$ et $\delta(t)$. Le paramètre $t$ est une coordonnée le long de la lemniscate : il en résulte que la vitesse du point courant par rapport au paramètre $t$ ne doit pas s'annuler.

Pour finir de spécifier le système de coordonnées on convient, ce qui est un simple choix d'échelle, de placer au point (-$p$,0) le pivot de la roue à |$p$|dents. Le nombre $p$ est donc un entier, positif pour une roue centrée à gauche du point de roulement, et négatif pour une roue centrée à droite.

On est alors en mesure d'énoncer le résultat suivant, qui se formule en deux phrases :

- le profil centré en (-$p$, 0) résulte de l'entraînement du point ($\rho(t)$, $\delta(t)$) de la courbe d'action par la rotation de centre (-$p$, 0) et d'angle $\psi(t)/p$, où $\psi$ est défini par la relation différentielle $\psi'(t) = \rho'(t)/\cos(\delta(t))$.
- l'angle $\psi(t)$ ainsi défini d'identifié avec $p$ fois la phase de la roue, ce qui signifie la chose suivante : considérons la roue dans une position quelconque où le contact a lieu pour la valeur $t_0$ du paramètre $t$, et faisons-la tourner un peu en suivant le contact par continuité ; le paramètre du point de contact est maintenant $t_1$. Alors l'angle dont la roue a tourné est ($\psi(t_1) - \psi(t_0)/p$.

On obtient une expression analogue dans le cas où l'organe denté est une crémaillère, en passant à la limite $p \rightarrow \infty$; les limites pour les $p$ positifs et négatifs sont les mêmes. Dans la proposition précédente, il faut remplacer "la rotation de centre (- $p$, 0) et d'angle $\psi(t) / p$" par : la translation d'amplitude $\psi(t)$ le long de la direction longitudinale de la crémaillère.

On a donc l'expression suivante pour les coordonnées cartésiennes ($x(t)$, $y(t)$) du profil de la roue :

$$x(t) = p\left(\cos\left(\frac{\psi(t)}{p}\right) - 1\right) + \rho(t)\sin\left(\delta(t) + \frac{\psi(t)}{p}\right)$$

$$y(t) = p\sin\left(\frac{\psi(t)}{p}\right) - \rho(t)\cos\left(\delta(t) + \frac{\psi(t)}{p}\right)$$

où :

- $p$ est un entier positif ou négatif, $-p$ est l'abscisse du centre de rotation et $|p|$ est le nombre de dents,
- $\delta(t), \rho(t)$ sont les coordonnées polaires du point $\underline{(t)}$ de la courbe d'action dans un système centré au point de roulement, dont l'axe polaire est tangent au cercle primitif, pour lequel l'angle polaire est dans l'intervalle $[0, \pi]$ et le rayon vecteur est positif sur un lobe et négatif sur l'autre,

-

$$\psi(t) = \int_{t_0}^{t} \frac{\rho'(\tau)d\tau}{\cos(\delta(\tau))}$$

- l'arbitraire sur la borne inférieure $t_0$ de l'intégrale correspond à une rotation de la roue autour de son pivot.

Ce résultat simple et général a des implications décisives pour la fabrication des engrenages.

Parmi les conditions imposées à la courbe d'action, se trouvent celles qui assurent la régularité locale des profils. On y accède en demandant que la courbure du profil soit partout finie, et une manière commode de le faire est de considérer l'abscisse $z(t)$ du point d'intersection entre la ligne des pivots (horizontale) et la normale à la courbe d'action au point $t$ (voir figure 5).

Convenons d'appeler profil d'ordre $p$ le profil de la roue centrée au point $(-p,0)$ ($p$ est un entier positif ou négatif). L'expression de sa courbure $\gamma(t)$ est (au signe près) :

$$\gamma(t) = \cfrac{1}{\rho(t) + \cfrac{p\sin(\delta(t))\rho'(t)}{p\cos(\delta(t))\delta'(t) + \rho'(t)}}$$

On note que $\psi(t)$ s'est éliminé et que la courbure du profil s'exprime en les coordonnées de la courbe d'action et leurs dérivées. Au point de roulement T, pour la valeur $t_0$ du paramètre qui annule $\rho(t)$, cette expression se réduit à :

$$\gamma(t_0) = \frac{1}{\sin(\delta(t_0))}\left(\frac{1}{p} + \cos(\delta(t_0))\frac{\delta'(t_0)}{\rho'(t_0)}\right)$$

Introduisons maintenant $z(t)$ dans la courbure ; il vient l'expression suivante, où les dérivées n'apparaissent plus car elles sont absorbées dans l'expression de $z(t)$

$$\gamma(t) = \frac{1}{\rho(t)} - \frac{p\sin(\delta(t))z(t)}{(p + z(t))\rho(t)^2}$$

7

Pour exclure les points anguleux, correspondant à une courbure infinie, il faut imposer :

$z(t)$ ne doit pas devenir égal à -$p$, c'est-à-dire que la normale au profil ne doit pas passer par le pivot, sauf pour $\delta(t) = \pi/2$

La différence des courbures prend la forme générale (toujours au signe près) :

$$\gamma_p(t) - \gamma_q(t) = \frac{(p-q)\sin(\delta(t))z(t)^2}{(p+z(t))(q+z(t))\rho(t)^2}$$

On voit alors qu'en plus de la condition précédente, il s'ajoute $z(t) \neq -q$, ce qui interdit à la normale de couper la ligne des centres X sur le pivot de l'autre roue.

On voit donc que la finitude de la courbure demande que $z(t)$ ne devienne pas égal à -$p$ qui est l'abscisse du pivot. C'est la première condition de régularité : en dehors de $\delta = \pi/2$, la normale à la lemniscate d'action ne doit pas passer par les pivots.

D'autre part, la simple intégrabilité de $\psi'(t)$ suppose qu'au voisinage des $t_1$ pour lesquels $\delta(t_1) = \pi/2$, la fonction $\rho'(t)$ s'annule assez vite. La lemniscate arrive donc orthogonalement sur la ligne X des pivots et les positions limites $z(t_1)$ s'identifient aux centres de courbure de la lemniscate, et on demandera en général que ces centres soient confondus (que la courbure soit continue en $\delta = \pi/2$) ; c'est la seconde condition :

En $\delta = \pi/2$, la courbure de la lemniscate d'action doit être continue, le centre de courbure se situer sur la ligne des pivots et ne pas coïncider avec l'un d'entre eux.

La première condition de régularité confirme les inconvénients de la denture connue en développante de cercle. En effet, les courbes d'action sont dans ce cas des segments de droite tangents au cercle de base (celui qu'on développe) et la longueur de ces segments est précisément limitée par le point de tangence au cercle de base, car en ce point de tangence la normale passe par le pivot, la courbure de la dent diverge, et avec elle la pression hertzienne au contact. Suivant l'invention, on incurve doucement la courbe d'action pour fuir cette situation où la normale à la courbe d'action s'approche trop d'un pivot. On peut alors prolonger la courbure d'action et augmenter ainsi le facteur de conduite, ce qui a des conséquences très concrètes. En fait, il convient d'incurver la courbe d'action jusqu'à en faire passer la normale par le point de roulement T.

Outre les conditions de régularité locale que l'on vient d'expliquer, la lemniscate d'action est soumise à une condition intégrale associée au choix d'échelle selon lequel on a décidé de centrer au point $(p,0)$ une roue à $|p|$ dents.

Quand la roue fait un tour complet, l'angle $\psi$ varie de $2p\pi$. La moyenne par dent est donc $2\pi$, et cette moyenne peut s'écrire comme l'intégrale de $\psi'(t)$ le long d'un tour complet de la lemniscate, d'où :

$$\int_L \frac{\rho'(t)dt}{\cos(\delta(t))} = 2\pi$$

Comme on peut toujours ajuster cette intégrale par une homothétie du type $\rho(t) \rightarrow a\rho(t)$ avec un "a" convenable, on voit que cette condition d'intégralité détermine la taille de la courbe d'action quand on s'en est donné la forme, qu'il s'agit maintenant de préciser.

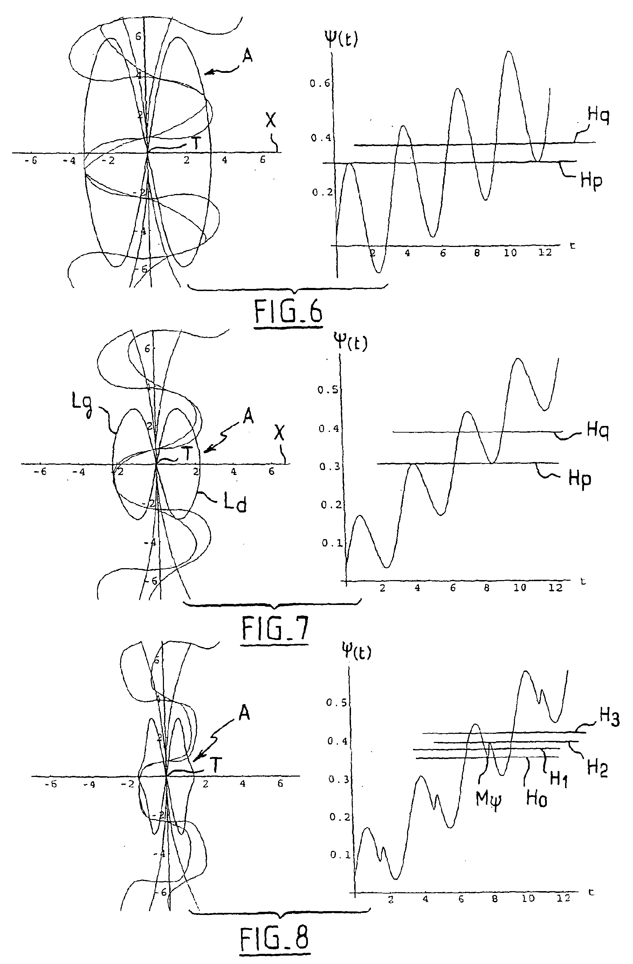

On peut toujours supposer, comme on va désormais le faire, que la paramétrisation de la lemniscate est telle que t varie de $2\pi$ pour un tour complet. Alors l'intégrant $\rho'(t)/\cos(\delta(t))$ est une fonction périodique dont la moyenne n'est pas nulle et vaut 1 par la condition d'intégralité. On connaît bien l'allure des primitives de telles fonctions : elles sont la somme d'une fonction linéaire (dont la pente est égale à la moyenne) et d'une fonction périodique de même période que l'intégrant. Autrement dit, la courbe qui représente $\psi(t)$ est une modulation périodique de la première diagonale (voir figures 6, 7 et 8).

On l'a vu, l'angle $\psi(t)$ intervient d'une part dans l'expression analytique du profil, et d'autre part constitue (au facteur 1/$p$ près) la phase de ce profil. Considérons donc le graphe de la fonction $\psi$ et une intersection de ce graphe avec une droite horizontale que l'on va déplacer. Cette droite passe par un point d'intersection ($t_0$, $\psi(t_0)$) tel que le point du profil correspondant à cette valeur $t_0$ du paramètre soit un point de contact possible pour la roue.

Si maintenant l'horizontale se déplace d'un petit $\Delta\psi$, l'abscisse $t_1$ du nouveau point d'intersection est le paramètre sur la roue du nouveau contact potentiel après que la roue ait tourné de $\Delta\psi$.

Ainsi, après ajustement d'une phase globale (la constante d'intégration dans $\psi(t)$), les intersections du graphe de ψ avec les horizontales désignent les contacts possibles du profil. On voit que les situations qualitatives dépendent de la "profondeur de modulation" du graphe de ψ.

La lemniscate est choisie pour que la dérivée de ψ(t) s'annule périodiquement, donc ψ(t) présente des minima et maxima locaux. Par définition de ψ(t), cela se produit quand le rayon ρ (t) de la lemniscate passe par un extremum en un δ différent de π/2. En un tel point, ρ'(t) s'annule et la normale à la lemniscate passe par le point double.

En ce qui concerne la fonction ψ(t), le nombre de ses intersections avec une horizontale mobile est variable.

Dans l'exemple de la figure 6, qui correspond à la géométrie des figures 1 à 5 où le facteur de conduite est exactement égal à 2, on voit qu'une droite horizontale quelconque $H_q$ coupe le graphe en 7 points, correspondant chacun à l'un des 7 points de contact visibles dans la zone d'engrènement telle que visualisée à gauche du graphe à la figure 8.

L'horizontale passe par des positions particulières $H_p$ où un contact disparaît à gauche du graphe sur un maximum local du graphe, tandis qu'un contact apparaît sur un minimum local à droite du graphe. La simultanéité de ces deux événements sur une même horizontale $H_p$ est due au fait que le facteur de conduite est un nombre entier dans cet exemple.

Chaque fois que le droite H passe par un minimum local de ψ(t), il apparaît un contact double qui se désintègre aussitôt en deux contacts simples dont l'un (le contact principal) monte vers les t grands le long de la branche croissante et l'autre (le contact secondaire) régresse vers les t petits le long de la branche décroissante, avant de s'annihiler, en passant par un contact double en un maximum local, avec le contact principal attaché à la branche croissante précédente.

Le long du graphe de la fonction ψ(t), les branches principales de la lemniscate sont associées aux contacts principaux qui se déplacent sur des segments strictement croissants du graphe. Les contacts secondaires se déplacent sur les segments complémentaires qui sont décroissants en moyenne.

En parcourant ce graphe, on passe alternativement par les contacts principaux associés aux deux branches principales de la lemniscate. Chacune de ces branches est (entièrement) menante ou menée. Au contraire, les contacts secondaires passent de menant à mené ou vice-versa au croisement de la ligne des pivots, c'est-à-dire en δ = π/2.

Pour qu'on ait continuité d'engrènement, il faut que quelle que soit la position d'une roue, elle vienne en contact avec l'autre par au moins un contact menant et au moins un contact mené. C'est le cas de la solution représentée à la figure 7, correspondant à un facteur de conduite exactement égal à 1.

En regardant le graphe de ψ(t) et compte tenu des définitions précédentes, on voit qu'on ne peut pas assurer la continuité d'engrènement, sans l'assurer du même coup par les contacts principaux seuls.

Il suffit pour cela que toute horizontale $H_q$ coupe la graphe de ψ(t) en au moins deux contacts principaux consécutifs (puisqu'ils sont alternativement menant et mené).

On appelle facteur de conduite (menant ou mené) le nombre de contacts (menants ou menés) que présentent entre elles deux roues engrenées. La continuité d'engrènement demande donc que les deux facteurs de conduite soient supérieurs ou égaux à un. On peut démonter que chaque facteur de conduite est le quotient par 2π de la variation de ψ le long de l'arc principal de même nom (menant ou mené).

Autrement dit, ils valent :

$$\int_{t_1}^{t_2} \frac{\rho'(t)\,dt}{\cos(\delta(t))} \qquad \text{avec} \quad \rho'(t_1) = \rho'(t_2) = 0,$$

$t_1$ et $t_2$ correspondant à deux points de la même branche principale, situés de part et d'autre du point de roulement, et tels que ρ'(t) ne s'annule pas entre eux.

Les deux facteurs de conduite ne sont pas nécessairement égaux. Il y a cependant égalité sous la condition (suffisante) que la lemniscate d'action A admette la ligne des pivots X comme axe de symétrie. C'est le cas des lemniscates considérées jusqu'ici.

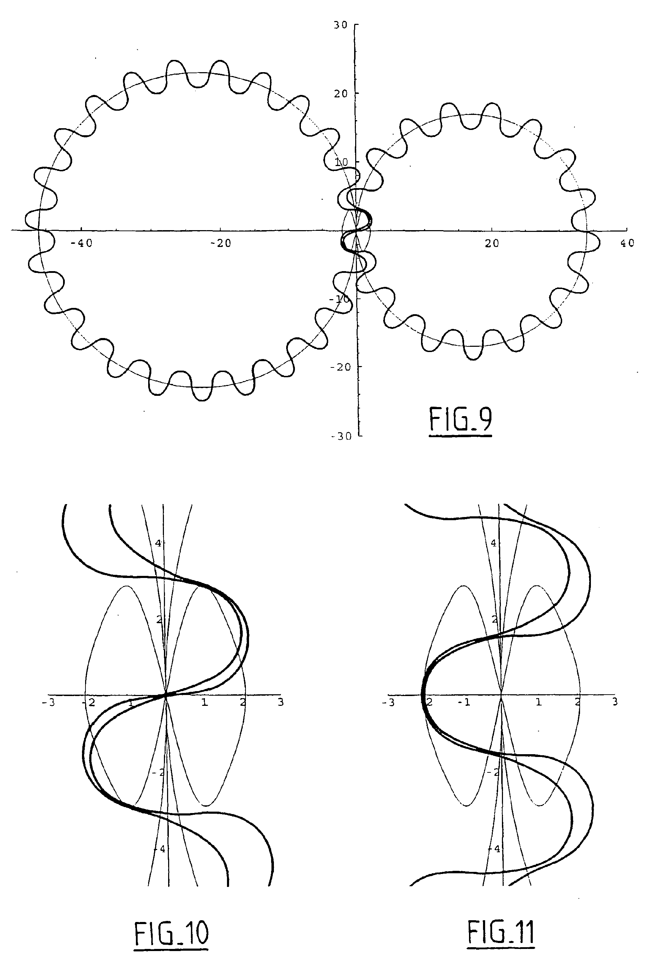

L'exemple des figures 7 et 9 à 11 est celui d'une lemniscate à lobes $L_g$ et $L_d$ relativement larges le long de l'axe X. Les dents correspondantes ont un aspect quasi-sinusoïdal.

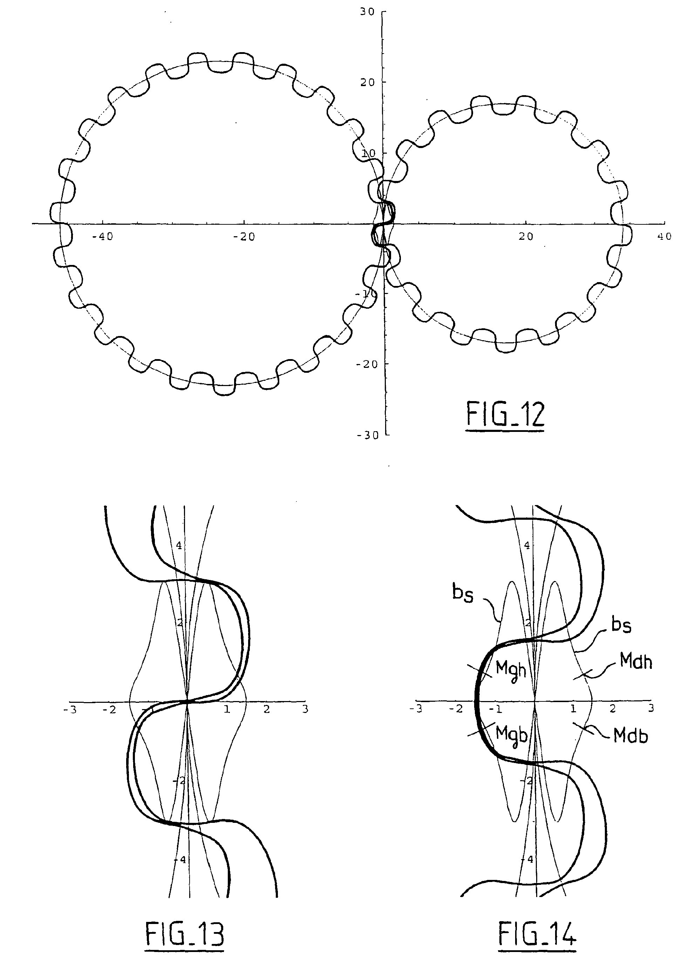

Dans l'exemple des figures 8 et 12 à 14, on a réduit la largeur des lobes $L_g$ et $L_d$, et la condition d'intégralité précédemment décrite a fait apparaître sur les branches secondaires bs de la lemniscate, de part et d'autre de l'axe X, des points $M_{gh}$, $M_{gb}$, $M_{dh}$, $M_{db}$ où ρ (t) prend une valeur locale minimum, c'est-à-dire où ρ'(t)=0. L'existence de ces minimums locaux se traduit sur la courbe ψ(t) par des minimums locaux correspondants $M_\psi$ (figure 8). Lorsque l'horizontale atteint une position $H_o$ passant par un tel minimum $M_\psi$, un contact apparaît sur le minimum local de la lemniscate, puis se subdivise en deux contacts (position $H_1$, correspondant à peu près à la position relative de la figure 14), à la suite de quoi l'un de ces deux contacts va s'agréger avec un autre contact et disparaître (position $H_2$), puis on retrouve ($H_3$) la situation classique d'une configuration à rapport de conduite égal à 1.

Une telle courbe d'action donne des dents plates et peu profondes ayant l'aspect d'un rectangle ou carré à côtés bombés et sommets arrondis.

Ainsi, l'invention permet de dessiner des engrenages qui possèdent la propriété remarquable que la prise d'appui se fait par une osculation, donc à pression hertzienne nulle.

Ces engrenages sont complètement définis par leur lemniscate d'action.

Les facteurs de conduite ne sont limités que par les nombres de dents.

La lemniscate est contrainte localement par les conditions de régularité et globalement par la condition d'intégralité. Il faut faire un compromis entre trois exigences :

- minimiser la pression le long des branches principales de la courbe d'action. Cela demande que la normale ne s'approche pas trop près du pivot de la roue le long des deux demi-branches principales intérieures au cercle primitif de la roue concernée.
- assurer que les prises de contact se fassent en un point où la dent n'est pas trop fine et qui ne soit pas trop proche du sommet de la tête. Cela demande que la normale ne s'approche pas trop près du pivot de la roue le long de la branche secondaire extérieure au cercle primitif de la roue concernée.
- optimiser les facteurs de conduite, dont l'allongement demande une lemniscate étendue dans la direction de l'axe Y, alors que son amincissement entre en conflit avec les deux points précédents et qu'il faut respecter la condition d'intégralité.

On voit qu'on ne saurait faire un choix "universel" de denture, qui ne dépend que de l'ordre de la roue. Le choix du profil doit dépendre des ordres des deux roues engrenées, car pour chacune d'entre elles, la courbure sur les flancs est contrôlée par les deux demi-branches principales ipsilatérales de la lemniscate, et la forme de la tête par sa branche secondaire controlatérale.

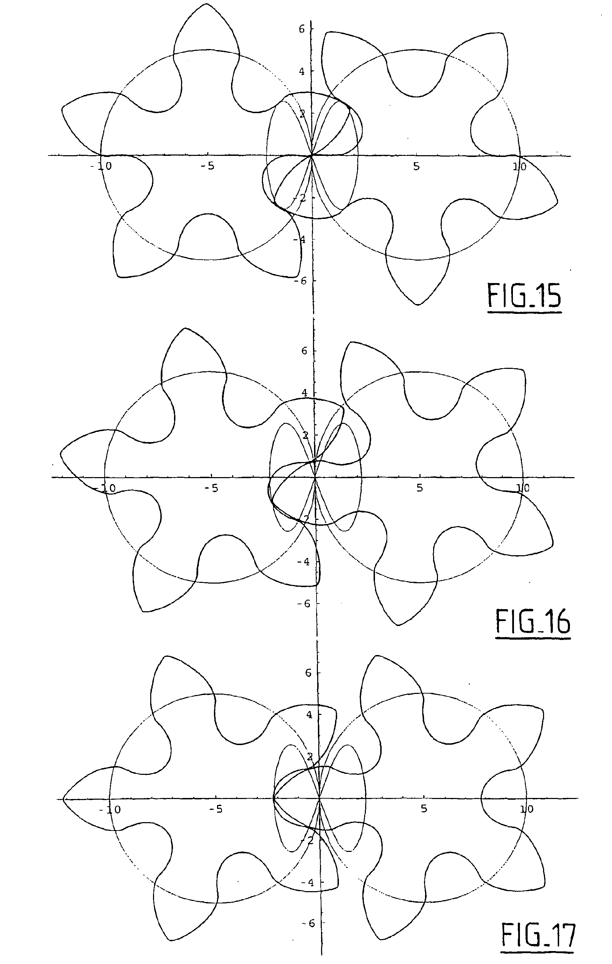

L'exemple des figures 15 à 17 montre la possibilité de réaliser un engrenage selon l'invention, présentant dans cet exemple un facteur de conduite égal à 1, présentant un nombre de dents particulièrement réduit pour chaque roue, à savoir cinq dents pour chaque roue dans cet exemple.

Chaque dent présente un léger rétrécissement ou col à sa base, ce col étant suivi par un addendum en forme d'ogive.

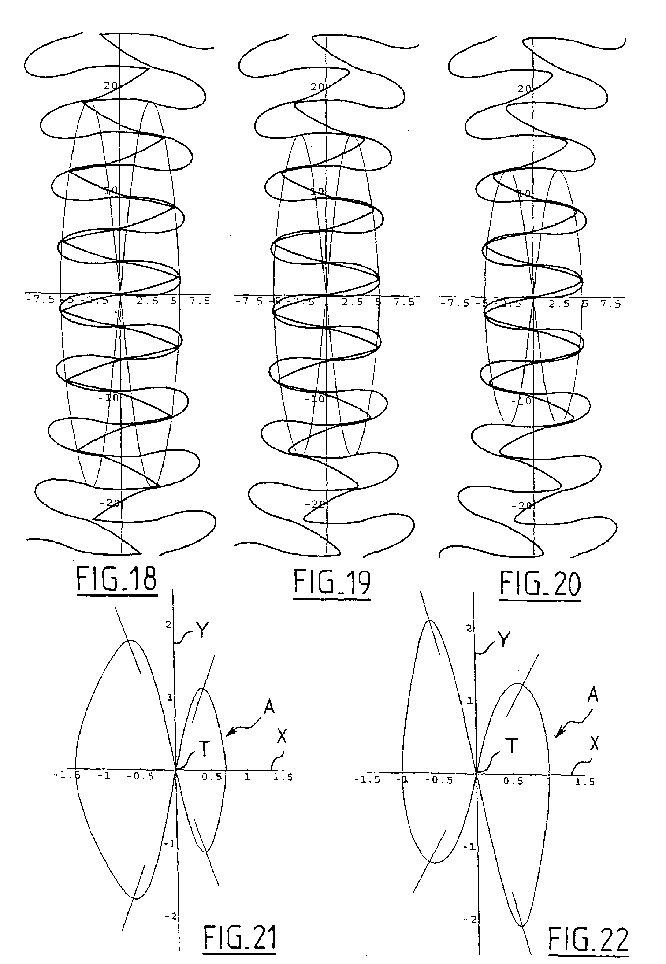

Les exemples des figures 18 à 20 illustrent au contraire des roues à dents nombreuses, avec un facteur de conduite qui est de 6 à la figure 18, 5 à la figure 19 et 4 à la figure 20.

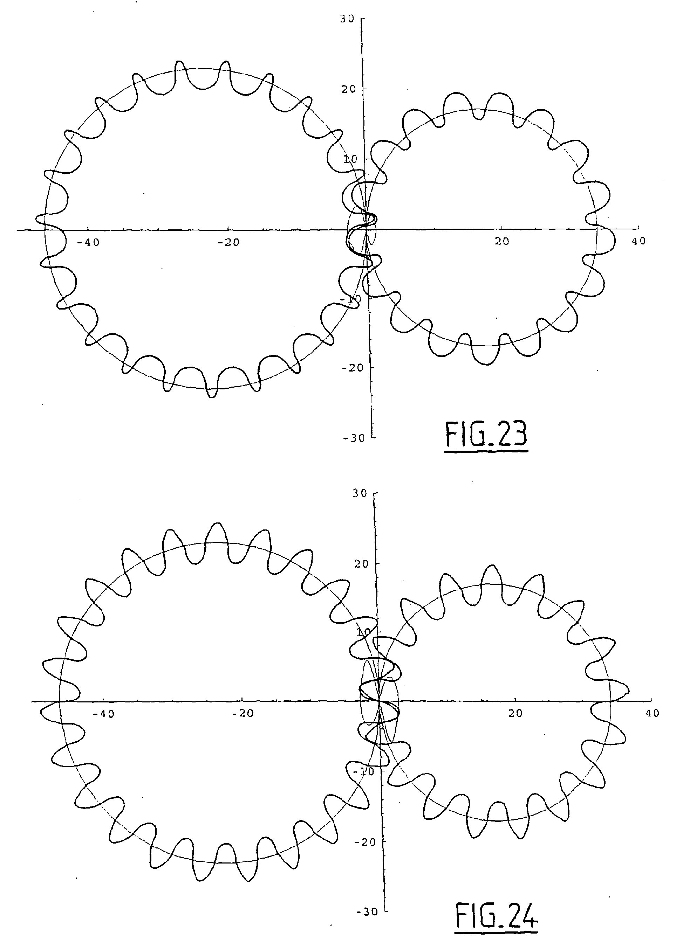

La figure 21 représente une lemniscate d'action A qui est symétrique par rapport à la ligne des pivots X mais dissymétrique par rapport à la tangente commune Y. La figure 23 représente l'engrenage correspondant. La roue dentée située du côté du lobe large de la lemniscate présente des dedendums couvrant une plage angulaire plus grande que les addendums. Sur l'autre roue dentée, située du côté du lobe moins large et moins haut, les addendums couvrent une plage angulaire plus grande que les dedendums.

Cette solution peut être avantageuse lorsque les deux organes dentés sont dans des matériaux différents, le lobe le plus large se trouvant du côté de la roue dont le matériau est le plus résistant, et dont les dents peuvent par conséquent être plus fines. Elle peut également être avantageuse pour améliorer le compromis entre les trois exigences précitées lorsque le rapport de transmission entre deux dentures extérieures est très différent de 1, ou pour un engrenage intérieur ou à crémaillère.

La lemniscate d'action A représentée à la figure 22 est symétrique par rapport au point de roulement T, mais dissymétrique par rapport à chacun des axes X et Y. l'axe X subdivise l'aire de chaque lobe en deux aires partielles inégales.

Un engrenage possédant une telle courbe d'action est représenté à la figure 24. Les dents dont dissymétriques par rapport à un rayon passant par leur sommet. Le facteur de conduite n'est pas le même dans les deux sens de transmission du couple. Un tel engrenage peut être intéressant dans le cas où le couple s'exerce de façon exclusive ou plus fréquente dans une direction, ou encore dans le cas où le couple dans une direction est plus élevé que dans l'autre direction. Tel est le cas par exemple des engrenages de boîtes de vitesses pour automobiles, dont le couple maximum dans le sens du frein moteur atteint environ seulement 20% du couple maximum dans le sens où le moteur propulse le véhicule.

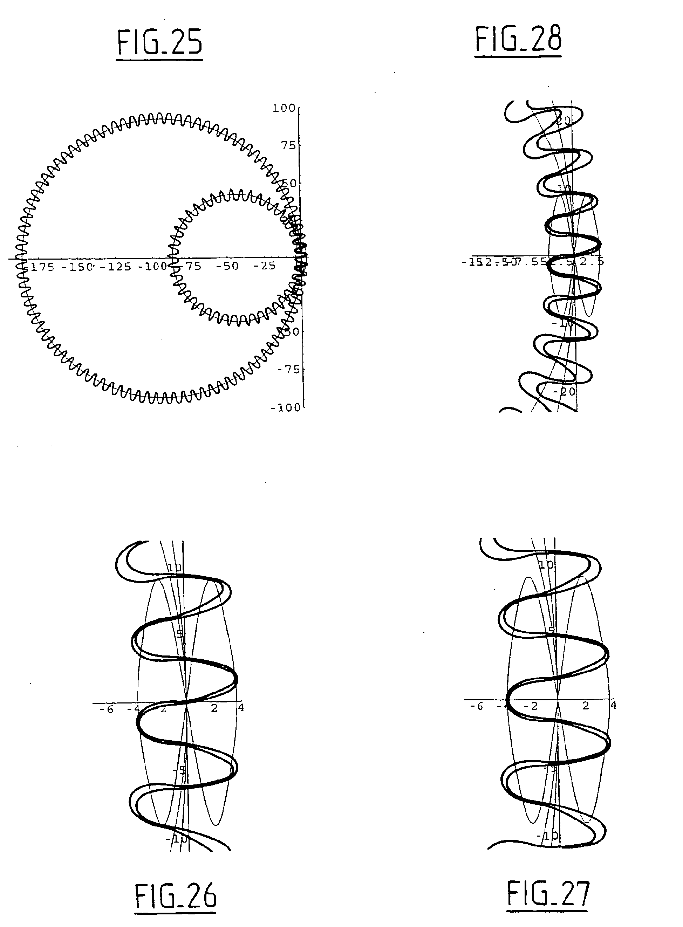

Les figures 25 à 32 illustrent deux exemples d'engrenage intérieur. Les conditions indiquées plus haut sont les mêmes pour un engrenage intérieur et un engrenage extérieur. Elles garantissent notamment l'absence d'interférence entre les profils pour les engrenages extérieurs, les engrenages avec crémaillères et les engrenages intérieurs à grand rapport de transmission de l'ordre d'environ 3 et plus. Toutefois, on le sait, les problèmes d'interférence sont en général plus difficiles à résoudre dans le cas des engrenages intérieurs, notamment entre les dents situées hors zone d'engrènement. Dans le cas d'un engrenage intérieur et si les nombres de dents sont trop proches l'un de l'autre, on vérifie en outre graphiquement qu'aucun problème d'interférence ne se présente hors zone d'engrènement.

Le mode de réalisation des figures 25 à 28 correspond à un facteur de conduite de 3, avec un nombre de dents relativement élevé.

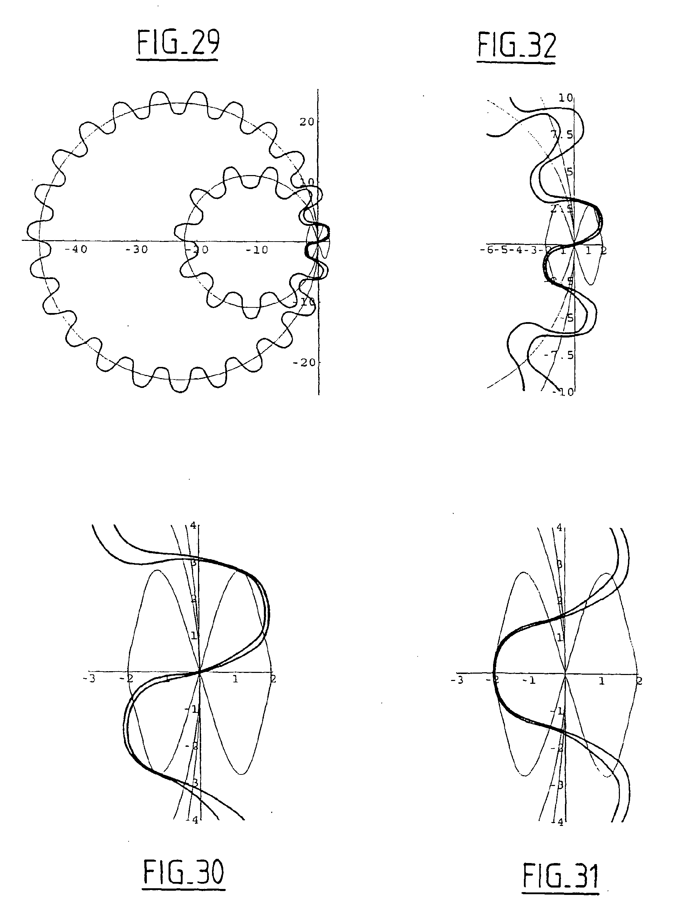

Dans l'exemple des figures 29 à 32, le nombre de dents est plus petit et le facteur de conduite n'est égal qu'à 1.

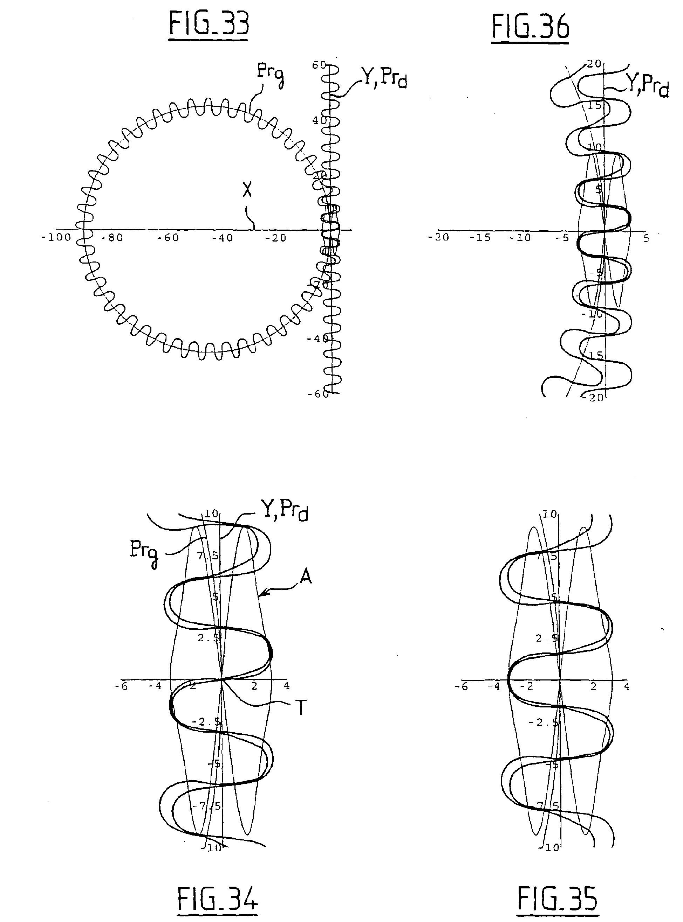

Les figures 33 à 40 montrent deux modes de réalisation où l'engrenage comprend une roue à denture extérieure engrenant avec une crémaillère rectiligne. Dans un tel cas, la courbe primitive de la crémaillère devient la droite Y, en tant que cercle centré à l'infini. Dans l'exemple des figures 33 à 36 il y a un relativement grand nombre de dents et le facteur de conduite est égal à 3.

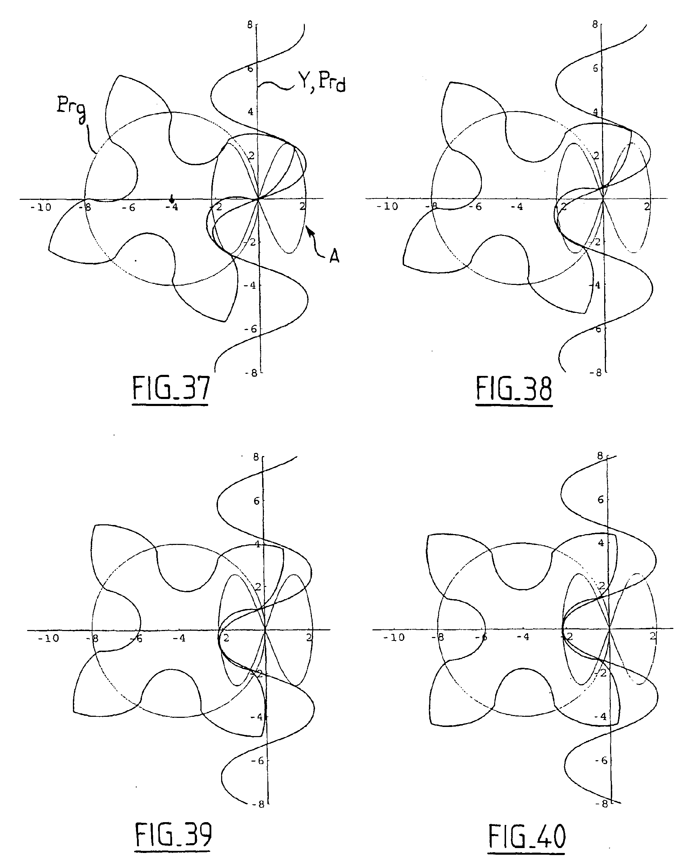

Au contraire, dans l'exemple des figures 37 à 40, le pignon ne comporte que quatre dents en forme d'ogive précédée d'un col, comme aux figures 15 à 17, et il engrène avec une crémaillère dont les dents ont un aspect quasi-sinusoïdal. Le facteur de conduite est égal à 1.

L'ensemble des exemples qui viennent d'être décrits permettent, par conséquent, de définir une lemniscate qui préfigure des propriétés voulues pour un engrenage déterminé. Cette lemniscate permet à son tour de définir les organes dentés qui doivent coopérer, en fonction de leur nombre de dents.

Comme l'une des conditions de régularité est que la normale à la lemniscate pour les points autres que ceux correspondants à $\delta = \pi/2$ ne passent pas par le pivot de roues, une lemniscate qui satisfait aux conditions de régularité pour l'une des roues peut ne pas satisfaire aux conditions de régularité pour l'autre roue si le nombre de dents de cette dernière est différent.

Hormis cette réserve, et la vérification de l'absence de problème d'interférence pour les engrenages intérieurs, tous les organes dentés ayant même courbe d'action sont compatibles entre eux. La notion de même courbe d'action signifie que les deux courbes d'action doivent exactement se superposer lorsque les organes dentés engrènent l'un avec l'autre. Par conséquent, dans le cas de courbes d'action dissymétriques, notamment le cas de la figure 21, un engrenage extérieur doit être composé d'une roue dentée dont la courbe d'action a son lobe large à l'intérieur du cercle primitif avec une roue dentée dont la courbe d'action a son lobe étroit à l'intérieur de son cercle primitif.

Bien entendu l'invention n'est nullement limitée aux exemples décrits et représentés.

Il est notamment possible d'évider les profils pour supprimer certains contacts peu utiles.

Par exemple, dans l'exemple des figures 2 et 3, on pourrait légèrement raccourcir, en direction radiale, la tête des dents pour supprimer les contacts le long des branches secondaires des lobes de la lemniscate, au moins la partie qui est peu utile dans la partie la plus profonde du creux de denture ou bien dans la zone où ce contact devient mené, si le sens de transmission d'effort est toujours le même.

Les organes dentés selon l'invention sont réalisables avec des dentures hélicoïdales, à pas fixe ou variables le long de l'axe.

Il est également possible de faire varier le profil d'engrenage le long de l'axe.

## Revendications

1. Organe denté mobile en rotation autour d'un axe éventuellement rejeté à l'infini, et comprenant des dents qui dans chaque plan perpendiculaire à l'axe, sont délimitées par un profil d'engrenage qui en cours d'engrènement vient en contact avec un profil conjugué d'un organe denté compatible, en des points de contact qui se déplacent le long d'un lieu géométrique appelé courbe d'action (A), tandis que le profil d'engrenage et le profil conjugué ont respectivement la même vitesse de rotation que deux courbes primitives, à savoir deux cercles primitifs idéaux ($Pr_d$, $Pr_g$) liés chacun à l'un respectif du profil d'engrenage et du profil conjugué, ces deux cercles primitifs roulant sans glisser l'un sur l'autre en un point de roulement (T) qui est fixe par rapport à la courbe d'action (A), où la courbe d'action (A) possède au moins un sommet ($S_{gh}$, $S_{gb}$, $S_{dh}$, $S_{db}$) où la distance $\rho(t)$ entre la courbe d'action (A) et le point de roulement (T) prend une valeur maximale, où le profil d'engrenage présente en au moins un point (11, 12, 13, 14) un rayon de courbure égal à ladite valeur maximale, où ce point du profil d'engrenage passe par ledit sommet de la courbe d'action (A) dans une orientation où, en ce point du profil d'engrenage, le centre de courbure du profil d'engrenage coïncide avec le point de roulement (T), **caractérisé en ce que** dans un repère dont l'axe des abscisses (x) est la ligne (X) des centres de rotation des courbes primitives, et dont l'axe des ordonnées (y) est la tangente (Y) commune aux courbes primitives au point de roulement (T), les coordonnées cartésiennes d'une courbe définissant au moins une partie du profil d'engrenage sont :

$$x(t) = p\left(\cos\left(\frac{\psi(t)}{p}\right) - 1\right) + \rho(t)\sin\left(\delta(t) + \frac{\psi(t)}{p}\right)$$

$$y(t) = p\sin\left(\frac{\psi(t)}{p}\right) - \rho(t)\cos\left(\delta(t) + \frac{\psi(t)}{p}\right)$$

expressions dans lesquelles :

 • $p$ est un entier positif ou négatif, $-p$ est l'abscisse du centre de rotation et $|p|$ est le nombre de dents de l'organe denté,
 • $\delta(t)$, $\rho(t)$ sont les coordonnées polaires du point t de la courbe d'action (A) dans un système centré au point de roulement (T), dont l'axe polaire est tangent au cercle primitif, pour lequel l'angle polaire est dans l'intervalle $[0, \pi]$ et le rayon vecteur est positif sur un lobe de la courbe d'action (A) et négatif sur l'autre.
 •

$$\psi(t) = \int_{t_0}^{t} \frac{\rho'(\tau)d\tau}{\cos(\delta(\tau))}$$

**2.** Organe denté selon la revendication 1, **caractérisé en ce que** les normales à la courbe d'action (A) coupent la ligne des centres en-dehors du centre de rotation ($C_g$ ; $C_d$).

**3.** Organe denté selon la revendication 2, **caractérisé en ce que** la courbure de la courbe d'action (A) est continue au voisinage d'au moins une intersection ($W_g$ ; $W_d$) avec la ligne (X) des centres de rotation ($C_g$ ; $C_d$) des courbes primitives ($Pr_g$ ; $Pr_d$) à distance du point de roulement (T).

**4.** Organe denté selon la revendication 2 ou 3, **caractérisé en ce que** la courbe d'action (A) coupe à angle droit la ligne (X) des centres de rotation ($C_g$ ; $C_d$) des courbes primitives ($Pr_g$ ; $Pr_d$) à distance du point de roulement (T).

**5.** Organe denté selon l'une des revendications 1 à 4, **caractérisé en ce que** la courbe d'action (A) comporte un point double au point de roulement (T).

**6.** Organe denté selon la revendication 5, **caractérisé en ce qu'**au point double, la courbe d'action (A) coupe la ligne (X) des centres de rotation des courbes primitives selon deux angles différents de 90°.

**7.** Organe denté selon l'une des revendications 1 à 6, **caractérisé en ce que** la courbe d'action est au moins une partie d'une lemniscate présentant un point double et deux lobes ($L_g$, $L_d$) qui coupent de part et d'autre du point double la ligne (X) des centres de rotation des courbes primitives.

**8.** Organe denté selon la revendication 7, **caractérisé en ce que** les lobes ($L_g$, $L_d$) sont symétriques par rapport à la ligne (X) des centres et par rapport à la tangente (Y) à la courbe primitive passant par le point de roulement (T).

**9.** Organe denté selon la revendication 7, **caractérisé en ce que** l'un des lobes est plus large que l'autre lobe.

**10.** Organe denté selon la revendication 7 ou 9, **caractérisé en ce que** la ligne (X) des centres divise l'aire entourée par chaque lobe en deux aires partielles inégales.

**11.** Organe denté selon l'une des revendications 1 à 10, **caractérisé en ce que** la courbe d'action est une courbe fermée entièrement parcourue par les points de contact.

**12.** Organe denté selon l'une des revendications 1 à 11, **caractérisé en ce que** chaque valeur de la fonction $\psi(t)$ est prise pour au moins trois valeurs différentes du paramètre $t$.

**13.** Organe denté selon l'une des revendications 1 à 12, **caractérisé en ce qu'**il est une crémaillère dont la courbe primitive est une droite en tant que cercle centré à l'infini.

**14.** Organe denté selon l'une des revendications 1 à 13, **caractérisé en ce qu'**il est réalisé à denture hélicoïdale à pas fixe ou variable.

**15.** Organe denté selon l'un des revendications 1 à 14, **caractérisé en ce que** le profil d'engrenage varie le long de l'axe de rotation.

**16.** Engrenage comprenant deux organes dentés inter-engrenés, chacun conforme à l'une des revendications 1 à 15, ayant des courbes d'action (A) qui coïncident.

**17.** Engrenage comprenant deux organes dentés inter-engrenés chacun conforme à l'une des revendications 1 à 15, **caractérisé en ce que** la naissance d'un contact entre deux dents a lieu à un sommet de la courbe d'action, par une osculation des deux profils, suivie d'un dédoublement du contact osculateur en deux contacts simples.

**Claims**

**1.** A toothed component that is rotatable about an axis located at a finite or infinite distance and comprising teeth that in each plane perpendicular to the axis are bounded by a meshing profile that during meshing comes into contact with a mating profile of a compatible toothed component, at contact points that move along a locus called an action curve (A), while the meshing profile and the mating profile respectively have the same rotation speed as two pitch curves, namely two ideal pitch circles ($Pr_d$, $Pr_g$) each attached to one respectively of the meshing profile and the mating profile, these two pitch circles rolling without sliding on one another at a pitch point (T) that is fixed relative to the action curve (A), wherein the action curve (A) has at least one apex ($S_{gh}$, $S_{gb}$, $S_{dh}$, $S_{db}$) where the distance $\rho(t)$ between the action curve (A) and the pitch point (T) has a maximum value, wherein at least one point (11, 12, 13, 14) of the meshing profiles has a radius of curvature equal to said maximum value, wherein said one point of the meshing profile passes through said apex of the action curve (A) in an orientation in which, at this point of the meshing profile, the centre of curvature of the meshing profile coincides with the pitch point (T), **characterized in that** in a coordinate system the abscissa axis (x) of which is the line (X) of the centres of rotation of the pitch curves, and the ordinate axis (y) of which is the tangent (Y) common to the pitch curves at the pitch point (T), the Cartesian coordinates of a curve defining at least a part of the meshing profile are:

$$x(t) = p\left(\cos\left(\frac{\psi(t)}{p}\right) - 1\right) + \rho(t)\sin\left(\delta(t) + \frac{\psi(t)}{p}\right)$$

$$y(t) = p\sin\left(\frac{\psi(t)}{p}\right) - \rho(t)\cos\left(\delta(t) + \frac{\psi(t)}{p}\right)$$

in which expressions:

• $p$ is a positive or negative integer, $-p$ is the abscissa of the centre of rotation and $|p|$ is the number of teeth of the toothed component,
• $\delta(t)$, $\rho(t)$ are the polar coordinates of the point t of the action curve (A) in a system centred on the pitch point (T), the polar axis of which is tangent to the pitch circle, the polar angle of which is in the interval [0, $\pi$] and the radius vector is positive on one lobe of the action curve (A) and negative on the other.
•

$$\psi(t) = \int_{t_0}^{t} \frac{\rho'(\tau)d\tau}{\cos(\delta(\tau))}$$

• $t_0$ is an arbitrary number the variation of which corresponds to a rotation of the toothed component about its pivot.

2. A toothed component according to claim 1, **characterized in that** the normals to the action curve (A) intersect the line of centres outside the centre of rotation ($C_g$; $C_d$).

3. A toothed component according to claim 2, **characterized in that** the curvature of the action curve (A) is continuous in the vicinity of at least one intersection ($W_g$; $W_d$) with the line (X) of the centres of rotation ($C_g$; $C_d$) of the pitch curves ($Pr_g$; $Pr_d$) at a distance from the pitch point (T).

4. A toothed component according to claim 2 or 3, **characterized in that** the action curve (A) intersects at a right angle the line (X) of the centres of rotation ($C_g$; $C_d$) of the pitch curves ($Pr_g$; $Pr_d$) at a distance from the pitch point (T).

5. A toothed component according to one of claims 1 to 4, **characterized in that** the action curve (A) comprises a double point at the pitch point (T).

6. A toothed component according to claim 5, **characterized in that** at the double point, the action curve (A) intersects the line (X) of the centres of rotation of the pitch curves at two angles which are different from 90°.

7. A toothed component according to one of claims 1 to 6, **characterized in that** the action curve is at least one part of a lemniscate having a double point and two lobes ($L_g$, $L_d$) that intersect, on either side of the double point, the line (X) of the centres of rotation of the pitch curves.

8. A toothed component according to claim 7, **characterized in that** the lobes ($L_g$, $L_d$) are symmetrical relative to the line (X) of the centres and relative to the tangent (Y) to the pitch curve passing through the pitch point (T).

9. A toothed component according to claim 7, **characterized in that** one of the lobes is wider than the other lobe.

10. A toothed component according to claim 7 or 9, **characterized in that** the line (X) of the centres divides the area bordered by each lobe into two unequal part-areas.

11. A toothed component according to one of claims 1 to 10, **characterized in that** the action curve is a closed curve which is entirely made of contact points.

12. A toothed component according to one of claims 1 to 11, **characterized in that** each value of the function $\psi(t)$ occurs for at least three different values of the parameter t.

13. A toothed component according to one of claims 1 to 12, **characterized by** being a rack the pitch curve of which is a straight line corresponding to a circle centred on infinity.

14. A toothed component according to one of claims 1 to 13, **characterized by** being realised with helical teeth with a fixed or variable pitch.

15. Toothed component according to one of claims 1 to 14, **characterized in that** the meshing profile varies along the axis of rotation.

16. A gear comprising inter-meshed toothed components, each according to one of claims 1 to 15, having action curves (A) that coincide.

17. A gear comprising two inter-meshed toothed components each according to one of claims 1 to 15, **characterized in that** the establishment of contact between two teeth takes place at an apex of the action curve, by an osculation of the two profiles, followed by a splitting of the osculating contact into two simple contacts.

**Patentansprüche**

1. Gezahntes Organ, das um eine ggf. ins Unendliche verlagerte Achse drehbeweglich ist und Zähne umfasst, die in jeder zur Achse senkrechten Ebene durch ein Verzahnungsprofil begrenzt sind, das während des Eingriffs mit einem konjugierten Profil eines kompatiblen gezahnten Organs an Kontaktpunkten in Kontakt kommt, die sich längs eines Wirkungskurve (A) genannten geometrischen Orts bewegen, während das Verzahnungsprofil und das konjugierte Profil jeweils dieselbe Drehgeschwindigkeit wie zwei Wälzkurven, und zwar zwei ideale Wälzkreise ($Pr_d$, $Pr_g$), haben, die jeweils mit einem des Verzahnungsprofils und des konjugierten Profils verbunden sind, wobei diese beiden Wälzkreise ohne zu gleiten aufeinander an einem Wälzpunkt (T) rollen, der bezüglich der Wirkungskurve (A) feststehend ist, wobei die Wirkungskurve (A) mindestens einen Scheitel ($S_{gh}$, $S_{gb}$, $S_{dh}$, $S_{db}$) besitzt, an dem der Abstand $\rho(t)$ zwischen der Wirkungskurve (A) und dem Wälzpunkt (T) einen maximalen Wert annimmt, wobei das Verzahnungsprofil an mindestens einem Punkt (11, 12, 13, 14) einen Krümmungsradius besitzt, der gleich diesem maximalen Wert ist, wobei dieser Punkt des Verzahnungsprofils den Scheitel der Wirkungskurve (A) in einer Ausrichtung passiert, in der an diesem Punkt des Verzahnungsprofils der Krümmungsmittelpunkt des Verzahnungsprofils mit dem Wälzpunkt (T) zusammenfällt, **dadurch gekennzeichnet, dass** in einem Bezugssystem, dessen Abszissenachse (x) die Linie (X) der Rotationsmittelpunkte der Wälzkurven ist und dessen Ordinatenachse (y) die den Wälzkurven am Wälzpunkt (T) gemeinsame Tangente (Y) ist, die kartesischen Ordinaten einer mindestens einen Teil des Verzahnungsprofils definierenden Kurve sind:

$$x(t) = p\left(\cos\left(\frac{\psi(t)}{p}\right) - 1\right) + \rho(t)\sin\left(\delta(t) + \frac{\psi(t)}{p}\right)$$

$$y(t) = p\sin\left(\frac{\psi(t)}{p}\right) - \rho(t)\cos\left(\delta(t) + \frac{\psi(t)}{p}\right)$$

wobei in diesen Ausdrücken:

- $p$ eine positive oder negative ganze Zahl ist, $-p$ die Abszisse des Rotationsmittelpunkts und $|p|$ die Zähnezahl des gezahnten Organs ist,
- $\delta(t)$, $\rho(t)$ die polaren Koordinaten des Punkts t der Wirkungskurve (A) in einem auf den Wälzpunkt (T) zentrierten System ist, dessen polare Achse zu dem Wälzkreis tangential ist, bei dem der Polwinkel im Intervall $[0, \pi]$ liegt und der Vektorradius auf einem Lappen der Wirkungskurve (A) positiv und auf dem anderen negativ ist,
- 

$$\psi(t) = \int_{t_0}^{t} \frac{\rho'(\tau)d\tau}{\cos(\delta(\tau))}$$

**2.** Gezahntes Organ nach Anspruch 1, **dadurch gekennzeichnet, dass** die Normalen auf die Wirkungskurve (A) die Linie der Mittelpunkte außerhalb des Rotationsmittelpunkts ($C_g$; $C_d$) schneiden.

**3.** Gezahntes Organ nach Anspruch 2, **dadurch gekennzeichnet, dass** die Krümmung der Wirkungskurve (A) in Nähe mindestens einer Schnittstelle ($W_g$; $W_d$) mit der Linie (X) der Rotationsmittelpunkte ($C_g$; $C_d$) der Wälzkurven ($Pr_g$; $Pr_d$) in einem Abstand vom Wälzpunkt (T) kontinuierlich ist.

**4.** Gezahntes Organ nach Anspruch 2 oder 3, **dadurch gekennzeichnet, dass** die Wirkungskurve (A) die Linie (X) der Rotationsmittelpunkte ($C_g$; $C_d$) der Wälzkurven ($Pr_g$; $Pr_d$) in einem Abstand vom Wälzpunkt (T) rechtwinklig schneidet.

**5.** Gezahntes Organ nach einem der Ansprüche 1 bis 4, **dadurch gekennzeichnet, dass** die Wirkungskurve (A) am Wälzpunkt (T) einen Doppelpunkt umfasst.

**6.** Gezahntes Organ nach Anspruch 5, **dadurch gekennzeichnet, dass** die Wirkungskurve (A) die Linie (X) der Rotationsmittelpunkte der Wälzkurven am Doppelpunkt in zwei von 90° abweichenden Winkeln schneidet.

**7.** Gezahntes Organ nach einem der Ansprüche 1 bis 6, **dadurch gekennzeichnet, dass** die Wirkungskurve mindestens ein Teil einer Lemniskate ist, die einen Doppelpunkt und zwei Lappen ($L_g$, $L_d$) aufweist, die zu beiden Seiten des Doppelpunkts die Linie (X) der Rotationsmittelpunkte der Wälzkurven schneiden.

**8.** Gezahntes Organ nach Anspruch 7, **dadurch gekennzeichnet, dass** die Lappen ($L_g$, $L_d$) bezüglich der Linie (X) der Mittelpunkte und bezüglich der durch den Wälzpunkt (T) laufenden Tangente (Y) an der Wälzkurve symmetrisch sind.

**9.** Gezahntes Organ nach Anspruch 7, **dadurch gekennzeichnet, dass** einer der Lappen breiter als der andere Lappen ist.

**10.** Gezahntes Organ nach Anspruch 7 oder 9, **dadurch gekennzeichnet, dass** die Linie (X) der Mittelpunkte die von jedem Lappen umgebene Fläche in zwei ungleiche Teilflächen teilt.

**11.** Gezahntes Organ nach einem der Ansprüche 1 bis 10, **dadurch gekennzeichnet, dass** die Wirkungskurve eine geschlossene Kurve ist, die von den Kontaktpunkten vollständig durchlaufen wird.

**12.** Gezahntes Organ nach einem der Ansprüche 1 bis 11, **dadurch gekennzeichnet, dass** jeder Wert der Funktion $\psi(t)$ bei mindestens drei verschiedenen Werten des Parameters t genommen wird.

**13.** Gezahntes Organ nach einem der Ansprüche 1 bis 12, **dadurch gekennzeichnet, dass** es eine Zahnstange ist, deren Wälzkurve eine Gerade als Kreis, dessen Mittelpunkt im Unendlichen liegt, ist.

**14.** Gezahntes Organ nach einem der Ansprüche 1 bis 13, **dadurch gekennzeichnet, dass** es als Schrägverzahnung mit fester oder veränderlicher Steigung ausgeführt ist.

**15.** Gezahntes Organ nach einem der Ansprüche 1 bis 14, **dadurch gekennzeichnet, dass** das Verzahnungsprofil sich längs der Rotationsachse ändert.

**16.** Verzahnung, umfassend zwei miteinander kämmende gezahnte Organe jeweils nach einem der Ansprüche 1 bis 15 mit zusammenfallenden Wirkungskurven (A).

**17.** Verzahnung, umfassend zwei miteinander kämmende gezahnte Organe jeweils nach einem der Ansprüche 1 bis 15, **dadurch gekennzeichnet, dass** das Entstehen eines Kontakts zwischen zwei Zähnen an einem Scheitel der Wirkungskurve durch eine Schmiegung der beiden Profile, worauf eine Verdopplung des schmiegenden Kontakts in zwei einfache Kontakte folgt, stattfindet.

FIG.1

FIG.2

FIG.3

FIG_4

FIG_5

FIG.6

FIG.7

FIG.8

FIG.9

FIG.10

FIG.11

FIG_12

FIG_13

FIG_14

FIG.15

FIG.16

FIG.17

22

FIG.18

FIG.19

FIG.20

FIG.21

FIG.22

FIG.23

FIG.24

FIG.25

FIG.28

FIG.26

FIG.27

FIG.29

FIG.32

FIG.30

FIG.31

## FIG.33

## FIG.36

## FIG.34

## FIG.35

FIG.37

FIG.38

FIG.39

FIG.40

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3251236 A

- US 5271289 A